# EUROPÄISCHE PATENTANMELDUNG

(11) **EP 4 147 856 A1**
(43) Veröffentlichungstag der Anmeldung: **15.03.2023**
(21) Anmeldenummer: 22178756.7
(22) Anmeldetag: 13.06.2022
(51) Int. Cl.: B29C 64/171, B22F 10/60, B22F 12/00, B22F 12/80, B29C 64/182, B29C 64/25, B29C 64/35, B29C 71/00, B33Y 10/00, B33Y 30/00, B33Y 40/20

(54) **SYSTEM UND VERFAHREN ZUR MOBILEN ADDITIVEN UND SUBTRAKTIVEN FERTIGUNG**

(30) Priorität: 10.09.2021 DE 102021123516; 16.12.2021 DE 102021133535
(71) Anmelder: Bionic Production GmbH, 21339 Lüneburg (DE)
(72) Erfinder: BECK, Daniel, 22395 Hamburg (DE); GORN, Michael, 22395 Hamburg (DE); GRUND, Maike, 21335 Lüneburg (DE); SCHMIDT, Hendrik Johannes, 21335 Lüneburg (DE); ZÜHLKE, Sandra, 21394 Kirchgellersen (DE); GÜNTZER, Felix, 21406 Melbeck (DE)
(74) Vertreter: VKK Patentanwälte PartG mbB

(57) **Zusammenfassung**

Ein System (1) zur mobilen additiven Fertigung umfasst ein erstes Modul (20), welches ein erstes Gehäuse (21) und eine erste Vorrichtung (22) zur additiven Fertigung eines ersten Erzeugnisses aus einem ersten Material und zur Nachbearbeitung des ersten Erzeugnisses aufweist, wobei das erste Gehäuse (21) die erste Vorrichtung (22) vollständig umschließt, ein zweites Modul (30), welches ein zweites Gehäuse (31) und eine zentrale Steuereinheit (32) aufweist, wobei das zweite Gehäuse (31) die zentrale Steuereinheit (32) vollständig umschließt, und einen Kommunikationskanal (23), welcher zwischen der zentralen Steuereinheit (32) und der ersten Vorrichtung (22) besteht.

## Beschreibung

Die Erfindung betrifft ein System und ein Verfahren zur mobilen additiven Fertigung. Das System umfasst ein erstes und ein zweites transportfähiges Modul. Das erste Modul umfasst eine erste Vorrichtung zur additiven Fertigung und zur Nachbearbeitung eines ersten Erzeugnisses aus einem ersten Material. Das zweite Modul weist eine zentrale Steuereinheit auf. Zwischen der zentralen Steuereinheit und der ersten Vorrichtung besteht ein Kommunikationskanal. Beide Module weisen jeweils ein Gehäuse auf, welches die erste Vorrichtung bzw. die zentrale Steuereinheit vollständig umschließt.

Bei der additiven Fertigung, die auch als 3D-Druck bezeichnet wird, werden dreidimensionale Gegenstände durch schichtweisen Materialaufbau erzeugt. Die für die additive Fertigung verwendeten Materialien liegen in der Regel als Festkörper vor und werden zum Auftragen bei der Fertigung des Gegenstandes geschmolzen, um dann an vordefinierter Stelle wieder zu erstarren. Als Werkstoffe für die additive Fertigung werden Kunststoffe, Keramiken, Metalle und auch Verbundwerkstoffe verwendet. Auf diese Art und Weise können Gegenstände unterschiedlichster und auch komplexer Form aus verschiedenstem Material kosten-, material- und zeiteffizient gefertigt werden.

Das vielseitige Potential der additiven Fertigung zur Neuanfertigung von Gegenständen und zur Reparatur bestehender Gegenstände auch an abgelegenen Orten mit geringer Infrastruktur, wie z. B. auf Bohrinseln, im Bergbau oder beim Einsatz im Katastrophenschutz, oder zur temporären lokalen Fertigung schnell und bedienerfreundlich zur Verfügung zu stellen, stellt eine technische Herausforderung dar und ist eine Aufgabe der Erfindung.

Diese Aufgabe wird durch die Gegenstände der unabhängigen Ansprüche gelöst.

Ein System zur mobilen additiven Fertigung umfasst ein erstes Modul, welches ein erstes Gehäuse und eine erste Vorrichtung zur additiven Fertigung eines ersten Erzeugnisses aus einem ersten Material und zur Nachbearbeitung des ersten Erzeugnisses aufweist, wobei das erste Gehäuse die erste Vorrichtung vollständig umschließt. Weiterhin umfasst das System ein zweites Modul, welches ein zweites Gehäuse und eine zentrale Steuereinheit aufweist, wobei das zweite Gehäuse die zentrale Steuereinheit vollständig umschließt, und einen Kommunikationskanal, welcher zwischen der zentralen Steuereinheit und der ersten Vorrichtung besteht.

Das System besteht aus zwei Modulen, die jeweils ein Gehäuse umfassen, welches in Form einer Hülle die erste Vorrichtung des ersten Moduls bzw. die zentrale Steuereinheit des zweiten Moduls umschließt. Hierdurch bildet jedes Modul eine für sich abgeschlossene Einheit gegenüber der Umgebung, wodurch der Transport und die solitäre Aufstellung eines jeden Moduls ermöglicht werden.

Das erste Modul umfasst eine erste Vorrichtung zur additiven Fertigung eines ersten Erzeugnisses aus einem ersten Material und zur Nachbearbeitung des ersten Erzeugnisses. Die erste Vorrichtung ist dabei eine Vorrichtung, die sowohl die additive Fertigung eines Erzeugnisses ermöglicht als auch dessen Nachbearbeitung im Anschluss an die Fertigstellung des additiven Fertigungsschrittes. Beispielsweise kann die Nachbearbeitung ein Fräsen, Bohren, Polieren oder Sandstrahlen des Erzeugnisses umfassen. Formen der Nachbearbeitung können in diesem Sinne auch als substraktive Fertigung verstanden werden. Alternativ kann das erste Modul zur additiven Fertigung und zur Nachbearbeitung auch zwei separate Vorrichtungen umfassen. Ferner kann die erste Vorrichtung ausgebildet sein, um eine Vorbehandlung an einem Gegenstand vorzunehmen, falls eine additive Fertigung zur Reparatur oder Weiterbildung eines bereits bestehenden Gegenstandes vorgenommen werden soll.

Das zweite Modul umfasst eine zentrale Steuereinheit, welche über den Kommunikationskanal mit der ersten Vorrichtung kommuniziert. Über die zentrale Steuereinheit kann der Nutzer die erste Vorrichtung bedienen. Die zentrale Steuereinheit umfasst dabei einen Computer mit Ein- und Ausgabemitteln, einen Prozessor, einen Datenspeicher, Mittel zur Kommunikation mit einem oder mehreren Netzwerken, und entsprechende Softwareanwendungen zur Steuerung der ersten Vorrichtung.

Der Aufbau des Systems aus einem ersten Modul und einem zweiten Modul mit einer zentralen Steuereinheit gewährleistet eine flexible Aufstellung und einen leichten Transport des Systems. Zudem erlaubt der modulare Aufbau einen Ausbau des Systems zu einer beliebigen Anzahl an weiteren Modulen, ausgestattet mit zusätzlichen Vorrichtungen zur additiven Fertigung oder zur Energieversorgung des Systems. In einer bevorzugten Ausführungsform umfasst das System neben dem ersten Modul und dem zweiten Modul ein drittes Modul, welches eine Vorrichtung zur Wärmebehandlung aufweist. In einer Ausführungsform, welche mehr als zwei Module umfasst, bestehen vorzugsweise Kommunikationskanäle zwischen der zentralen Steuereinheit und etwaigen Vorrichtungen in den weiteren Modulen und/oder Kanäle zur Energieübertragung. Die zentrale Steuereinheit des zweiten Moduls ist derart ausgebildet, dass sie die etwaigen Vorrichtungen in den weiteren Modulen steuern kann.

Der Kommunikationskanal, welcher zwischen der zentralen Steuereinheit und der ersten Vorrichtung besteht, kann erfindungsgemäß eine Drahtlosverbindung oder auch eine kabelgebundene Verbindung umfassen.

Das erste Modul und/oder das zweite Modul können/kann im Rahmen der Erfindung ferner ein Materiallager und/oder eine Klimaanlage und/oder einen Stromgenerator umfassen.

Vorteilhafte Weiterbildungen der Erfindung sind in den Unteransprüchen, der Beschreibung und den Zeichnungen angegeben.

Gemäß einer Ausführungsform umfassen das erste Modul oder das zweite Modul eine zweite Vorrichtung zur additiven Fertigung eines zweiten Erzeugnisses aus einem zweiten Material, wobei die zweite Vorrichtung vollständig vom ersten Gehäuse oder zweiten Gehäuse umschlossen wird. Bevorzugt basiert die zweite Vorrichtung auf einer anderen additiven Fertigungstechnik als die erste Vorrichtung. Das zweite Material unterscheidet sich vorzugsweise in seiner Werkstoffklasse von derjenigen des ersten Materials. Beispielsweise kann das erste Material ein Metall umfassen und das zweite Material kann einen Kunststoff umfassen. Die Integration mehrerer und/oder unterschiedlicher Vorrichtungen zur additiven Fertigung in das System zur mobilen additiven Fertigung erhöht die Fertigungskapazität und/oder die Vielseitigkeit des Systems.

Es besteht ein weiterer Kommunikationskanal zwischen der zentralen Steuereinheit und der zweiten Vorrichtung, so dass die zweite Vorrichtung mittels der zentralen Steuereinheit bedient und gesteuert werden kann.

Ferner umfassen das erste Modul oder das zweite Modul eine dritte Vorrichtung zur Erfassung der dreidimensionalen Form eines Objekts, wobei die dritte Vorrichtung vollständig vom ersten Gehäuse oder vom zweiten Gehäuse umschlossen wird. Eine solche dritte Vorrichtung kann beispielsweise ein optischer 3D-Scanner oder auch ein taktiles Messgerät sein. Die Erfassung der dreidimensionalen Form eines Objektes digitalisiert die Form des erfassten Objektes. Ausgehend von der digitalisierten Form können mit der additiven Fertigung insbesondere Reproduktionen des erfassten Objekts gefertigt oder Reparaturen bzw. Weiterentwicklungen an dem erfassten Objekt vorgenommen werden.

Es besteht ein zusätzlicher Kommunikationskanal zwischen der zentralen Steuereinheit und der dritten Vorrichtung, so dass die dritte Vorrichtung mittels der zentralen Steuereinheit bedient und gesteuert werden kann.

In einer weiteren Ausführungsform umfasst die erste Vorrichtung einen Lichtbogendrahtauftragschweißer. Beim Lichtbogendrahtauftragschweißen (im Englischen "wire arc additive manufacturing") wird ein Draht aus dem ersten Material unter Verwendung eines elektrischen Lichtbogens aufgeschmolzen. Das Lichtbogendrahtauftragschweißen ist eine additive Fertigungstechnik, die die Fertigung größerer Erzeugnisse mit hoher Fertigungsrate ermöglicht und zugleich eine hohe Fertigungsqualität bietet. Die erste Vorrichtung umfasst beispielsweise eine Mehrachs-Werkzeugmaschine oder ein Robotiksystem, die den Lichtbogendrahtauftragschweißer aufnehmen.

Ferner umfasst die erste Vorrichtung einen CNC-Fräser. Das CNC-Fräsen dient der Nachbearbeitung des ersten Erzeugnisses. Vorzugsweise muss das erste Erzeugnis nach seiner Fertigung und vor dem CNC-Fräsen zur Nachbearbeitung nicht umgespannt werden. Der CNC-Fräser kann beispielsweise von einer Mehrachs-Werkzeugmaschine oder einem Robotiksystem aufgenommen werden.

In einer weiteren Ausführungsform umfasst die erste Vorrichtung einen Drehkipptisch und einen Roboterarm, wobei der Roboterarm derart konfiguriert ist, dass er mit dem Lichtbogendrahtauftragschweißer und/oder dem CNC-Fräser zusammenwirkt. Der Roboterarm, der den Lichtbogenauftragschweißer und/oder den CNC-Fräser aufnimmt, ist bevorzugt ein Mehrachs-Roboterarm. Mittels eines Drehkipptisches und eines Roboterarms kann ein hoher Grad an Bearbeitungsflexbilität bei der additiven Fertigung und der Nachbearbeitung des ersten Erzeugnisses erzielt werden.

Gemäß einer Ausführungsform weist das erste Gehäuse eine erste Tür und das zweite Gehäuse eine zweite Tür auf, wobei durch die erste Tür und durch die zweite Tür eine Bedienperson das erste Modul bzw. das zweite Modul betreten kann. Das erste und das zweite Modul stellen jeweils mit ihrem ersten bzw. ihrem zweiten Gehäuse einen eigenständigen von der Bedienperson betretbaren Raum dar, der für jedes der beiden Module eine solitäre Aufstellung erlaubt.

Gemäß einer weiteren Ausführungsform weisen das erste Gehäuse und das zweite Gehäuse jeweils eine Geometrie und eine materielle Beschaffenheit auf, welche derjenigen eines Standardcontainers entsprechen. Dass das erste und das zweite Gehäuse eine Geometrie und eine materielle Beschaffenheit aufweisen, welche derjenigen eines Standardcontainers entsprechen, sind Voraussetzungen dafür, dass das erste und zweite Modul dem international gültigen Sicherheitsstandard der International Maritime Organisation genügen und somit alle Kriterien für die Kennzeichnung mit einer CSC (International Convention for Safe Containers)-Plakette erfüllen. Erfüllen das erste und das zweite Modul die Kriterien für die CSC-Kennzeichnung, so sind das erste und das zweite Modul geeignet zum internationalen Transport.

Ferner umfasst das erste Modul in einer weiteren Ausführungsform eine Bodenplattform, wobei die Bodenplattform lösbar mit dem ersten Gehäuse verbunden ist und die erste Vorrichtung mit der Bodenplattform verbunden ist. Hierdurch wird eine leichte Austauschbarkeit von unterschiedlichen Vorrichtungen zur additiven Fertigung innerhalb des ersten Moduls ermöglicht. Beispielsweise kann hierdurch ein leichter Austausch zwischen einer ersten Vorrichtung, die eine Werkzeugmaschine umfasst, und einer solchen, die eine Robotikeinheit aufweist, oder zwischen einer ersten Vorrichtung, die einen Lichtbogenauftragschweißer umfasst, und einer solchen, die ein anderes Werkzeug zur additiven Fertigung aufweist, gewährleistet werden. In einer weiteren Ausführungsform umfasst das System ein visuelles Ausgabegerät, wobei das visuelle Ausgabegerät derart ausgebildet ist, dass eine Bedienung und Wartung des Systems durch augmented reality (AR)-Anwendungen unterstützt werden. Ein solches visuelles Ausgabegerät kann beispielsweise ein Head-Mounted Display sein, welches die Bedienperson am Kopf trägt und welches dieser virtuelle Informationen über der von ihr visuell wahrgenommen Umgebung anzeigt. Solche virtuellen Informationen können die Bedienung und Wartung des Systems für die Bedienperson vereinfachen. Solche Vereinfachungen in der Bedienung und Wartung sind insbesondere bei einem mobilen System, welches temporär und am Ort des Bedarfs eingesetzt wird, von Vorteil, da die Bedienpersonen In diesem Fall regelmäßig nur wenig im Umgang mit dem System geschult sind.

Ferner umfassen das visuelle Ausgabegerät einen Quick Response (QR)-Code-Scanner und die erste Vorrichtung einen ersten QR-Code, die zweite Vorrichtung einen zweiten QR-Code, die dritte Vorrichtung einen dritten QR-Code und die zentrale Steuereinheit einen vierten QR-Code. Der QR-Code-Scanner kann beispielsweise eine Kamera zum Erfassen der QR-Codes umfassen. Durch das Erfassen der QR-Codes der unterschiedlichen Vorrichtungen des Systems können diese, zum Beispiel während einer Phase der Kalibrierung des visuellen Ausgabegeräts und der AR-Anwendung, als Hologramme in der AR-Anwendung an den Stellen ihrer realen Entsprechung räumlich verankert werden. Neben der ersten Vorrichtung, der zweiten Vorrichtung, der dritten Vorrichtung und der zentralen Steuereinheit können auch weitere Bestandteile des Systems mit einem QR-Code versehen werden, um diesen Bestandteilen ein Hologramm in der AR-Anwendung zuordnen zu können und dieses dem Nutzer mittels des visuellen Ausgabegeräts an entsprechender Stelle anzuzeigen. Diese Ausführungsform ermöglicht die visuelle Zuordnung von virtuellen Inhalten zu ihren physischen Entsprechungen auf eine einfache, verlässliche und kostengünstige Weise.

Weiterer Gegenstand der Erfindung ist ein Verfahren der mobilen additiven Fertigung. Das Verfahren umfasst das Transportieren eines ersten Moduls, welches eine erste Vorrichtung zur additiven Fertigung eines ersten Erzeugnisses aus einem ersten Material aufweist, und eines zweiten Moduls, welches eine zentrale Steuereinheit und eine zweite Vorrichtung zur additiven Fertigung eines zweiten Erzeugnisses aus einem zweiten Material aufweist. Weiterhin umfasst das Verfahren das Bereitstellen eines Kommunikationskanals zwischen der zentralen Steuereinheit und der ersten Vorrichtung, das Fertigen des ersten Erzeugnisses mit einem ersten Material und das Fertigen des zweiten Erzeugnisses mit einem zweiten Material.

Gemäß einer weiteren Ausführungsform umfasst das erste Material ein Metall. Ferner umfasst das zweite Material einen Kunststoff. Gemäß einer Ausführungsform umfasst das Verfahren das Nachbearbeiten des ersten Erzeugnisses, ohne das erste Erzeugnis nach dessen Fertigung zu bewegen.

Gemäß einer weiteren Ausführungsform umfasst das Verfahren ferner das Bedienen der ersten Vorrichtung und/oder der zweiten Vorrichtung und/oder der zentralen Steuereinheit auf Basis von augmented reality-Anwendungen.

Nachfolgend wird die Erfindung beispielhaft anhand einer vorteilhaften Ausführungsform unter Bezugnahme auf die Figur beschrieben. Es zeigt:
- Fig. 1: Schematische Darstellung eines Systems zur mobilen additiven Fertigung,
- Fig. 2: Perspektivische Schnittansicht durch das erste Modul einer bevorzugten Ausführungsform und
- Fig. 3: Perspektivische Schnittansicht durch das erste Modul einer weiteren bevorzugten Ausführungsform.

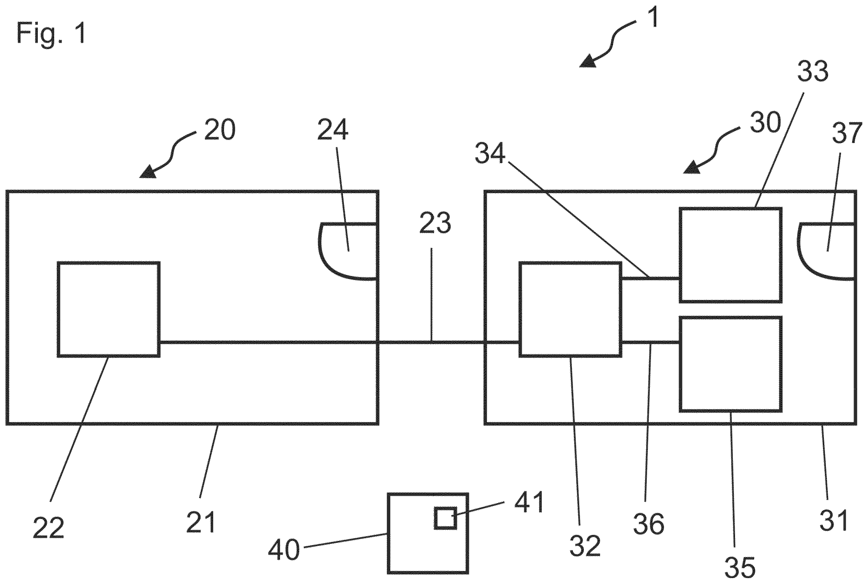

Fig. 1 stellt ein System 1 zur mobilen additiven Fertigung dar, das ein erstes Modul 20 und ein zweites Modul 30 umfasst.

Das erste Modul 20 umfasst ein erstes Gehäuse 21 und das zweite Modul 30 umfasst ein zweites Gehäuse 31. Das erste Gehäuse 21 und das zweite Gehäuse 31 entsprechen einem modifizierten ISO- bzw. Standardcontainer der Größe 20 ft. Die Außenmaße eines 20 ft Standardcontainers betragen 6,058 m in der Länge, 2,438 m in der Breite und 2,591 m in der Höhe. Darüber hinaus erfüllen das erste Modul 20 und das zweite Modul 30 den international gültigen CSC (International Convention for Safe Containers)-Sicherheitsstandard der International Maritime Organisation, der den internationalen Transport des ersten Moduls 20 und des zweiten Moduls 30 in der Luft, auf See und über Land ermöglicht.

Das erste Modul 20 weist eine erste Vorrichtung 22 zur additiven Fertigung eines Bauteils aus einem Metall mittels des Lichtbogendrahtauftragschweißens auf. Bei diesem Verfahren wird ein Metalldraht unter Verwendung eines elektrischen Lichtbogens geschmolzen und aufgetragen, wodurch Schicht-für-Schicht das additiv gefertigte Bauteil entsteht. Mit der Technik des Lichtbogendrahtauftragschweißens kann die erste Vorrichtung 22 Bauteile mit einem Durchmesser von bis zu 700 mm mit einer Fertigungsgeschwindigkeit von bis zu 600 cm³/h fertigen. Ferner lassen sich mit dem Lichtbogendrahtauftragschweißen unterschiedliche Metalle verarbeiten, beispielsweise Stahl, Edelstahl und Aluminium.

Weiterhin ermöglicht die erste Vorrichtung 22 das CNC-Fräsen eines Bauteils. Die Vorrichtung 22 ist derart ausgebildet, dass ein Umspannen des mit dem Lichtbogendrahtauftragschweißen gefertigten Bauteils für das CNC-Fräsen nicht notwendig ist.

Das erste Gehäuse 21 weist eine erste Tür 24 auf, durch welche das erste Modul 20 von einer Bedienperson betreten werden kann.

Das zweite Modul 30 weist eine zweite Vorrichtung 33 zur additiven Fertigung eines zweiten Bauteils aus einem kohlefaserverstärkten Kunststoff auf. Die zweite Vorrichtung 33 basiert auf dem FDM (Fused Deposition Modeling)-Verfahren, welches auch als Schmelzschichtung bezeichnet wird, bei welchem das Bauteil mithilfe von Filamenten (Kunststofffäden) schichtweise aufgebaut wird.

Ferner umfasst das Modul 30 einen 3D-Scanner 35.

Das zweite Modul 30 weist weiterhin eine zentrale Steuereinheit 32 auf. Die zentrale Steuereinheit 32 bildet die zentrale IT-Betriebs- und Datenspeicherzentrale des Systems 1 und umfasst einen Computer mit Ein- und Ausgabemitteln, einen Prozessor, einen Datenspeicher, Mittel zur Kommunikation mit einem oder mehreren Netzwerken, CAD/CAM-Softwareanwendungen und entsprechende Softwareanwendungen zur Steuerung der ersten Vorrichtung 22, der zweiten Vorrichtung 33 und des 3D-Scanners 35.

Die zentrale Steuereinheit 32 ist über jeweils einen Kommunikationskanal 23, 34, 36 mit der ersten Vorrichtung 22, der zweiten Vorrichtung 33 und dem 3D-Scanner verbunden. Jeder der Kommunikationskanäle 23, 34, 36 kann einzeln als Drahtlosverbindung oder als drahtgebundene Verbindung eingerichtet werden.

Das zweite Gehäuse 31 weist eine zweite Tür 37 auf, durch welche das zweite Modul 30 von einer Bedienperson betreten werden kann.

Das System 1 umfasst ferner AR-Anwendungen, die der Bedienperson eine Einführung und Übersicht über das System 1 geben, die Bedienperson bei den Arbeitsabläufen während des Betriebs des Systems 1 unterstützen und Hilfestellungen und Informationen bei Fehlern und Problemen während des Betriebsablaufs bieten. Hierzu umfasst das System 1 ein Head-Mounted Display (HMD) 40, welches derart ausgebildet ist, dass es von der Bedienperson am Kopf getragen werden kann, dieser virtuelle Informationen in ihr Sichtfeld einblendet und die Interaktion mit den virtuellen Informationen in Form einer Bedienung mittels Gesten, Kopfbewegungen oder Sprachanweisungen ermöglicht.

Für die AR-Anwendungen erfolgt die visuelle Zuordnung von virtuellen Inhalten, wie z. B. der Hologrammdarstellung von Vorrichtungen des Systems 1, mit ihren jeweiligen physischen Entsprechungen innerhalb einer Kalibrierung des HMD 40 und der AR-Anwendungen. Während dieser Kalibrierung werden die Vorrichtungen des Systems 1 durch das Einlesen von QR-Codes in der AR-Anwendung räumlich verankert. Zu diesem Zweck weisen die erste Vorrichtung 22, die zweite Vorrichtung 33, die dritte Vorrichtung 35 und die zentrale Steuereinheit 32 jeweils einen QR-Code auf, welche durch einen QR-Code-Scanner 41 des HMD 40 während der Kalibrierung eingelesen werden.

Auf diese Weise kann der Bedienperson bei einer Ausführung einer der AR-Anwendungen nach der erfolgten Kalibrierung die virtuelle Darstellung einer Vorrichtung des Systems 1 im HMD 40 über die Ansicht ihrer realen Entsprechung gelegt werden und so die Bedienbarkeit des Systems 1 deutlich erhöhen.

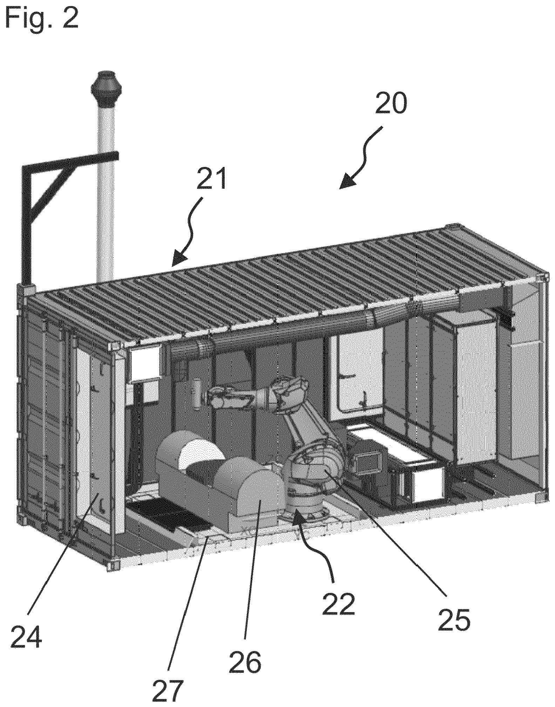

Fig. 2 zeigt eine perspektivische Schnittansicht durch das erste Modul 20 einer bevorzugten Ausführungsform des Systems 1. Die erste Vorrichtung 22 ist auf einer mit dem Boden des ersten Gehäuses 21 lösbar verbundenen Bodenplattform 27 angebracht. Die erste Vorrichtung 22 der gezeigten Ausführungsform umfasst einen Roboterarm 25 und einen Drehkipptisch 26. Der Roboterarm 25 kann einen Lichtbogenauftragschweißer und einen CNC-Fräser für die additive Fertigung und die Nachbearbeitung des additiv gefertigten Erzeugnisses aufnehmen. Alternativ könnte die auf der Bodenplattform 27 angebrachte erste Vorrichtung 22 anstelle des Roboterarms 25 und des Drehkipptisches 26 ebenso gut eine Mehrachs-Werkzeugmaschine umfassen, welche einen Lichtbogenauftragschweißer und einen CNC-Fräser für die additive Fertigung und die Nachbearbeitung des Erzeugnisses aufnehmen kann.

Die lösbare Verbindung zwischen Bodenplattform 27 und erstem Gehäuse 21 erlaubt hierbei einen leichten Austausch von Bodenplattformen, die mit unterschiedlichen Vorrichtungen, insbesondere mit solchen zur additiven Fertigung oder Nachbearbeitung des gefertigten Erzeugnisses, ausgestattet sind.

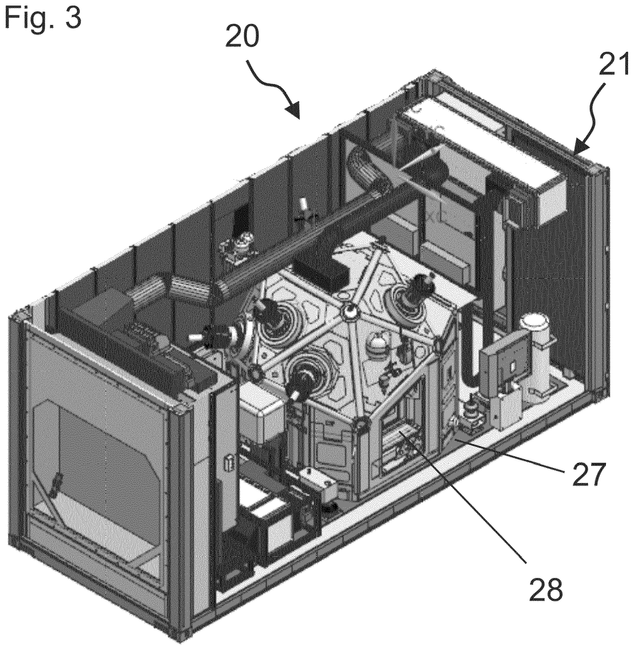

Fig. 3 zeigt eine perspektivische Schnittansicht durch das erste Modul 20 einer weiteren bevorzugten Ausführungsform des Systems 1. Die erste Vorrichtung 22 umfasst anstelle eines Robotiksystems eine auf einer mit dem Boden des ersten Gehäuses 21 lösbar verbundenen Bodenplattform 27 angebrachte Mehrachs-Werkzeugmaschine 28. Die Mehrachs-Werkzeugmaschine 28 ist insbesondere dazu ausgebildet, um einen CNC-Fräser und einen Lichtbogenauftragschweißer für die Bearbeitung eines Werkstückes aufzunehmen.

Durch die lösbare Verbindung zwischen Bodenplattform 27 und erstem Gehäuse 21 kann ein leichter Austausch der Mehrachs-Werkzeugmaschine 28 mit einer anderen Vorrichtung vorgenommen werden.

### BEZUGSZEICHENLISTE

- 1: System zur mobilen additiven Fertigung
- 20: erstes Modul
- 21: erstes Gehäuse
- 22: erste Vorrichtung
- 23: erster Kommunikationskanal
- 24: erste Tür
- 25: Roboterarm
- 26: Drehkipptisch
- 27: Bodenplattform
- 28: Mehrachs-Werkzeugmaschine
- 30: zweites Modul
- 31: zweites Gehäuse
- 32: zentrale Steuereinheit
- 33: zweite Vorrichtung
- 34: zweiter Kommunikationskanal
- 35: dritte Vorrichtung
- 36: dritter Kommunikationskanal
- 37: zweite Tür
- 40: visuelles Ausgabegerät
- 41: QR-Code-Scanner

## Patentansprüche

1. System (1) zur mobilen additiven Fertigung, umfassend:
ein erstes Modul (20), welches ein erstes Gehäuse (21) und eine erste Vorrichtung (22) zur additiven Fertigung eines ersten Erzeugnisses aus einem ersten Material und zur Nachbearbeitung des ersten Erzeugnisses aufweist, wobei das erste Gehäuse (21) die erste Vorrichtung (22) vollständig umschließt;
ein zweites Modul (30), welches ein zweites Gehäuse (31) und eine zentrale Steuereinheit (32) aufweist, wobei das zweite Gehäuse (31) die zentrale Steuereinheit (32) vollständig umschließt; und
einen Kommunikationskanal (23), welcher zwischen der zentralen Steuereinheit (32) und der ersten Vorrichtung (22) besteht.

2. System (1) nach Anspruch 1,
wobei das erste Modul (20) oder das zweite Modul (30) eine zweite Vorrichtung (33) zur additiven Fertigung eines zweiten Erzeugnisses aus einem zweiten Material umfassen, wobei die zweite Vorrichtung (33) vollständig vom ersten Gehäuse (21) oder vom zweiten Gehäuse (31) umschlossen wird.

3. System (1) nach einem der vorstehenden Ansprüche,
wobei das erste Modul (20) oder das zweite Modul (30) eine dritte Vorrichtung (35) zur Erfassung der dreidimensionalen Form eines Objekts umfassen, wobei die dritte Vorrichtung (35) vollständig vom ersten Gehäuse (21) und/oder vom zweiten Gehäuse (32) umschlossen wird.

4. System (1) nach einem der vorstehenden Ansprüche,
wobei die erste Vorrichtung (22) einen Lichtbogendrahtauftragschweißer umfasst.

5. System (1) nach einem der vorstehenden Ansprüche,
wobei die erste Vorrichtung (22) einen CNC-Fräser umfasst.

6. System (1) nach einem der vorstehenden Ansprüche,
wobei die erste Vorrichtung (22) einen Drehkipptisch (26) und einen Roboterarm (25) umfasst, wobei der Roboterarm (25) derart konfiguriert ist, dass er mit dem Lichtbogendrahtauftragschweißer und/oder dem CNC-Fräser zusammenwirkt.

7. System (1) nach einem der vorstehenden Ansprüche,
wobei das erste Gehäuse (21) eine erste Tür (24) und das zweite Gehäuse (31) eine zweite Tür (37) aufweist, wobei durch die erste Tür (24) und durch die zweite Tür (37) eine Bedienperson das erste Modul (20) bzw. das zweite Modul (30) betreten kann.

8. System (1) nach einem der vorstehenden Ansprüche,
wobei das erste Gehäuse (21) und das zweite Gehäuse (31) jeweils eine Geometrie und eine materielle Beschaffenheit aufweisen, welche derjenigen eines Standardcontainers entsprechen.

9. System (1) nach einem der vorstehenden Ansprüche,
wobei das erste Modul (20) eine Bodenplattform (27) umfasst, wobei die Bodenplattform (27) lösbar mit dem ersten Gehäuse (21) verbunden ist und die erste Vorrichtung (22) mit der Bodenplattform (27) verbunden ist.

10. System (1) nach einem der vorstehenden Ansprüche,
wobei das System (1) ein visuelles Ausgabegerät (40) umfasst, wobei das visuelle Ausgabegerät (40) derart ausgebildet ist, dass eine Bedienung und Wartung des Systems (1) durch augmented reality-Anwendungen unterstützt werden.

11. System (1) nach einem der vorstehenden Ansprüche,
wobei das visuelle Ausgabegerät (40) einen Quick Response (QR)-Code-Scanner (41) und die erste Vorrichtung (22) einen ersten QR-Code, die zweite Vorrichtung (33) einen zweiten QR-Code, die dritte Vorrichtung (35) einen dritten QR-Code und die zentrale Steuereinheit (32) einen vierten QR-Code umfassen.

12. Verfahren der mobilen additiven Fertigung, das folgende Schritte umfasst:
Transportieren eines ersten Moduls (20), welches eine erste Vorrichtung (22) zur additiven Fertigung eines ersten Erzeugnisses aus einem ersten Material aufweist, und eines zweiten Moduls (30), welches eine zentrale Steuereinheit (32) und eine zweite Vorrichtung (33) zur additiven Fertigung eines zweiten Erzeugnisses aus einem zweiten Material aufweist;
Bereitstellen eines Kommunikationskanals (23) zwischen der zentralen Steuereinheit (32) und der ersten Vorrichtung (22);
Fertigen des ersten Erzeugnisses mit einem ersten Material; und
Fertigen des zweiten Erzeugnisses mit einem zweiten Material.

13. Verfahren nach Anspruch 12,
wobei das erste Material ein Metall umfasst und/oder
wobei das zweite Material einen Kunststoff umfasst.

14. Verfahren nach einem der Ansprüche 12 bis 13, wobei das Verfahren folgenden Schritt umfasst:
Nachbearbeiten des ersten Erzeugnisses ohne das erste Erzeugnis nach seiner Fertigung zu bewegen.

15. Verfahren nach einem der Ansprüche 12 bis 14, wobei das Verfahren folgenden Schritt umfasst:
Bedienen der ersten Vorrichtung (22) und/oder der zweiten Vorrichtung (33) und/oder der zentralen Steuereinheit (32) auf Basis von augmented reality-Anwendungen.
